# EUROPÄISCHE PATENTSCHRIFT

(11) **EP 2 774 836 B1**
(45) Veröffentlichungstag und Bekanntmachung des Hinweises auf die Patenterteilung: **08.05.2019**
(21) Anmeldenummer: 14157885.6
(22) Anmeldetag: 05.03.2014
(51) Int. Cl.: B63B 1/32, B63B 39/06

(54) **Wasserfahrzeug, insbesondere Schleppschiff**
Watercraft, in particular tugboat
Navire, notamment remorqueur

(30) Priorität: 08.03.2013 DE 102013204033
(43) Veröffentlichungstag der Anmeldung: 10.09.2014
(73) Patentinhaber: Voith Patent GmbH, 89522 Heidenheim (DE)
(72) Erfinder: Dr. Jürgens, Dirk, 89518 Heidenheim (DE); Palm, Michael, 89522 Heidenheim (DE)

(56) Entgegenhaltungen:
- WO-A2-2007/050473
- DE-A1- 10 018 573
- DE-A1- 19 858 067
- JP-A- 2006 076 483
- JP-A- 2011 168 251
- US-A- 4 561 371

## Beschreibung

Die Erfindung betrifft ein Wasserfahrzeug, insbesondere Schleppschiff, im Einzelnen mit den Merkmalen aus dem Oberbegriff von Anspruch 1.

Derartige Wasserfahrzeuge sind in verschiedenen Ausführungen vorbekannt. Diese finden häufig Anwendung in der Assistenz größerer Wasserfahrzeuge, beispielsweise als Schleppschiffe. Stellvertretend wird auf die Druckschriften US 6698374, JP 2011168251 A1 verwiesen. US 6698374 offenbart einen Schiffskörper mit in einem Endbereich angeordnetem steuerbarem Antrieb und zur Kursstabilisierung eine zentral in der Längsmittenebene angeordnete Finne am Heckbereich. Bei den steuerbaren Antrieben kann es sich beispielsweise um Ruderpropeller oder Zykloidalpropeller handeln. Bei dieser Ausführung sind Instabilitäten bei der Geradeausfahrt durch die asymmetrische Umströmung des Schiffskörpers gegeben. Zur Lösung dieser Problematik wird in der Druckschrift WO 11113964A1 vorgeschlagen, beidseits der Längsmittelebene jeweils eine Finne vorzusehen, die symmetrisch bezüglich dieser angeordnet sind. Diese Lösung ist konstruktiv sehr aufwendig.

Der Erfindung lag daher die Aufgabe zugrunde, ein Wasserfahrzeug, insbesondere ein Schleppschiff mit einem Antrieb an einem Endbereich und am Heck angeordneter Finne derart weiterzuentwickeln, dass die Steuerbarkeit sicher gewährleistet ist und die Kursstabilität gegeben ist.

Die erfindungsgemäße Lösung ist durch die Merkmale des Anspruchs 1 charakterisiert. Vorteilhafte Ausbildungen sind in den Unteransprüchen beschrieben.

Ein erfindungsgemäß ausgeführtes Wasserfahrzeug, insbesondere Schleppschiff mit einem Schiffskörper und einer im Heckbereich angeordneten und sich in Längsrichtung des Schiffskörpers erstreckenden Finne, welche eine als Anströmkante fungierende Vorderkante und eine zu dieser entgegengesetzt ausgerichtete Hinterkante und Seitenflächen aufweist, ist dadurch gekennzeichnet, dass der Finne im Bereich ihrer Hinterkante eine Stabilisierungseinrichtung zugeordnet ist, umfassend zumindest einen jeder Seitenfläche zugeordneten und gegenüber dieser in einem Winkel angeordneten strömungsführenden Flächenbereich.

Unter einem Schiffskörper wird der Teil des Wasserfahrzeuges verstanden, welcher diesem die Schwimmfähigkeit verleiht. Dieser wird auch als Schiffsrumpf bezeichnet.

Der Bereich der Hinterkante beinhaltet die Hinterkante und einen Bereich vordefinierter Größe der Hinterkante vor- oder nachgeordnet.

Die Erfinder haben erkannt, dass das Vorsehen einer erfindungsgemäß ausgeführten Stabilisierungseinrichtung die Strömungsführung positiv beeinflusst und damit die Kursstabilität und Steuerbarkeit derartiger Wasserfahrzeuge mit einfachen Mitteln erheblich verbessert.

Zwar ist aus der Druckschrift DE 34 25 233 A1 ein Schwert oder eine Finne zur Stabilisierung der Fahrtrichtung von Wasserfahrzeugen in Form von Surfbrettern mit einem sich in das Wasser von der Unterseite des Wasserfahrzeuges her erstreckenden Grundkörper mit symmetrisch an beiden Seiten angeordneten Leitflächen vorbekannt. Allerdings sind die Leitflächen in Form eines Tragflügelprofiles ausgebildet sind und erstrecken sich über die gesamte Erstreckung des Schwertes oder der Finne in Längsrichtung. Diese Ausbildung dient bei Surfbrettern jedoch ausschließlich der Verhinderung der Ausbildung von Wirbeln bei Schräganströmung. und Beeinflussung der Kavitationsbildung. Auch ist es aus DE3503295 bekannt, durch Einführung eines horizontalen Schlitzes oder allgemein einer Materialschwächung auf ca. halber Höhe der Finne dem unteren Teil der Finne die Möglichkeit zu eröffnen, seine Winkellage an wirkende Strömungsverhältnisse anzupassen. Demgegenüber sind jedoch am Schleppschiff gänzlich andere Verhältnisse gegeben. Hier bilden sich bei Geradeausfahrt im Bereich des Überganges zwischen Finne und Schiffsrumpf beidseitig Wirbel aus - abwechselnd rechts oder links, wobei die Abströmung asymmetrisch bezüglich der Mittelebene der Finne erfolgt. Daraus resultieren unerwünschte Seitenkräfte. Die diese bedingenden Wirbel werden erfindungsgemäß gezielt durch die genannte Anordnung der Leitflächen im Bereich der Hinterkante der Finne gestört.

Erfindungsgemäß ist der einzelne strömungsführende Flächenbereich gegenüber einer Horizontalebene, insbesondere einer durch die theoretische Konstruktionswasserlinie und einer Senkrechten zu dieser beschreibbaren Ebene (Horizontalebene) oder einer parallel zu dieser angeordneten Ebene geneigt, insbesondere in einem Winkel von ≠0°, vorzugsweise in einem Bereich von 1° bis 20° oder -1° bis -20° verlaufend ausgeführt. Durch diese geneigte Anstellung der Leitflächen werden die unerwünschten Seitenkräfte mit Sicherheit unterbunden.

Der zusätzlich der Seitenfläche zugeordnete strömungsführende Flächenbereich ist in einem Winkel zu dieser angeordnet. Vorzugsweise ist der Flächenbereich orthogonal oder in einem Winkel von beispielsweise bis zu 45° zur Seitenfläche.

Der einzelne strömungsführende Flächenbereich ist ferner jeweils in einem Winkel zwischen einschließlich 0° und 180° gegenüber einer den Verlauf der Hinterkante der Finne in Höhenrichtung beschreibenden Verlaufslinie ausgerichtet. Erfindungsgemäß erfolgt die Anordnung in Höhenrichtung des Schiffskörpers betrachtet in einem Bereich, der sich von einer theoretischen Konstruktionswasserlinie am Schiffskörper über zwei Drittel der Erstreckung der Finne in Höhenrichtung ausgehend vom Übergangsbereich zwischen Schiffskörper und Finne, erstreckt. Die Konstruktionswasserlinie entspricht einer sich theoretisch ergebenden Linie bei einem angenommenen Gewicht des Wasserfahrzeuges, welche sich aus dem Schnitt der Wandung des Schiffskörpers mit der Wasseroberfläche ergibt.

Die Anordnung des einzelnen strömungsführenden Flächenbereiches in Längsrichtung der Finne betrachtet erfolgt in einem Bereich, der sich von der Hinterkante der Finne oder in einem vordefinierten Abstand zu dieser in Längsrichtung über mindestens ein Viertel der Finne erstreckt. Denkbar sind auch Ausführungen, die sich darüber erstrecken oder über die gesamte Finnenlänge.

Für die Erstreckung des einzelnen strömungsführenden Flächenbereiches in Längsrichtung der Finne betrachtet sind nachfolgend genannte drei Grundausführungen denkbar:
1. Erstreckung über einen Teilbereich der Erstreckung der Finne in Längsrichtung bis vor die Hinterkante, insbesondere bis zu einem definierten Abstandsmaß zur Hinterkante;
2. Erstreckung über einen Teilbereich der Erstreckung der Finne in Längsrichtung bis zur Hinterkante,
3. Erstreckung über einen Teilbereich der Erstreckung der Finne in Längsrichtung über die Hinterkante der Finne hinaus;
4. Erstreckung entlang der/ parallel zur Hinterkante.

Als hinsichtlich der Strömungsbeeinflussung an der Hinterkante besonders vorteilhaft werden dabei die Ausführungen 3 und 4 angesehen.

In besonders vorteilhafter Ausbildung erfolgt die Erstreckung jedoch nur über einen Teilbereich der Erstreckung der Finne in Längsrichtung, vorzugsweise über etwa ein Viertel der Erstreckung der Finne, da eine längere Erstreckung lediglich eine Erhöhung des Strömungswiderstandes bedingt.

Jeder Seitenfläche der Finne ist erfindungsgemäß eine Mehrzahl von beabstandet zueinander angeordneten strömungsführenden Flächenbereichen zugeordnet, wobei zumindest ein Teil der jeweils einer Seitenfläche zugeordneten strömungsführenden Flächenbereiche nahezu parallel zueinander angeordnet ist.

Um besonders stabile Verhältnisse zu erzielen, erfolgt bei in der Längsmittelebene des Wasserfahrzeuges angeordneter Finne die Anordnung und Ausrichtung der einzelnen strömungsführenden Flächenbereiche an den einzelnen Seitenflächen symmetrisch bezüglich einer durch die Längsachse der Finne und einer Senkrechten in vertikaler Richtung zu dieser charakterisierenden Ebene.

Strömungstechnisch besonders vorteilhaft ist es, wenn die an unterschiedlichen Seitenflächen der Finne angeordneten strömungsführenden Flächenbereiche miteinander über einen im Bereich der Hinterkante angeordneten Verbindungsflächenbereich verbunden sind, d.h. ein Flächenbereich entlang der einen Seitenfläche um die Hinterkante bis auf die andere Seitenfläche geführt wird .

In konstruktiv und fertigungstechnisch besonders einfacher Art und Weise ist ein einzelner strömungsführender Flächenbereich an einem plattenförmigen Element ausgebildet. Je nach Anordnung und Ausrichtung kann dieser dann von der Ober- und/oder Unterseite oder Vorder- oder Rückseite des plattenförmigen Elementes gebildet werden.

Unter einem plattenförmigen Element wird ein Element verstanden, dessen Ausdehnung in Längen- und Breitenrichtung erheblich größer als in Dickenrichtung ist. Entscheidend ist, dass das plattenförmige Element hinsichtlich seiner Dimensionierung derart ausgelegt ist, dass eine genügend hohe Steifigkeit unter Einwirkung der Strömung erhalten bleibt.

Die einzelnen einander gegenüberliegenden Flächen an den plattenförmigen Elementen können parallel zueinander oder in einem Winkel zueinander ausgerichtet sein. Ferner können diese hinsichtlich der Kontur jeweils in Längs-und/oder Querrichtung unterschiedlich ausgeführt sein. In besonders vorteilhafter Ausführung sind diese in fertigungstechnisch einfacher Art und Weise eben und parallel zueinander ausgeführt. Die ideale Geometrie und Dimensionierung der strömungsführenden Flächenbereiche ist als Funktion der Randbedingungen des Einsatzfalles zu ermitteln.

Bei Vorsehen mehrerer derartiger plattenförmiger Elemente, können diese entweder einzeln oder gruppenweise oder gemeinsam, beispielsweise über eine gemeinsame Trageinrichtung mittels zumindest einer Verbindung aus der nachfolgenden Gruppe an der Finne und/oder dem Schiffskörper befestigt werden:
- kraftschlüssige Verbindung
- formschlüssige Verbindung
- stoffschlüssige Verbindung.
In besonders vorteilhafter Ausführung erfolgt die Verbindung durch Verschweißen.

Ist der einzelne strömungsführende Flächenbereich von der Vorderseite eines plattenförmigen Elementes gebildet, kann dieses in Analogie zur vorbeschriebenen Ausführung am Schiffskörper und/oder der Finne befestigt werden.

In einer besonders vorteilhaften Ausführung sind die jeder Seitenfläche zugeordneten strömungsführenden Flächenbereiche an einem plattenförmigen Element ausgebildet, welches an der Hinterkante mittig unter Überstand der beiden Flächenbereiche angeordnet ist. Die strömungsführenden Flächenbereiche ergeben sich als Funktion der Erstreckung des plattenförmigen Elementes entlang der Hinterkante und der Erstreckung quer zu dieser, d.h. senkrecht zur jeweiligen Seitenfläche. Vorzugsweise erfolgt die Erstreckung eines derartigen plattenförmigen Elementes vom Übergangsbereich der Finne am Schiffskörper bis zu zwei Dritteln der Höhe der Finne. Der Überstand in Breitenrichtung beträgt ca 0.2 bis 0.6m.

Die erfindungsgemäße Lösung ist nachfolgend anhand von Figuren erläutert. Es zeigen:
- Figuren 1a bis 1d: einen Ausschnitt aus einem Wasserfahrzeug mit erfindungsgemäßer Stabilisierungseinrichtung gemäß einer ersten Variante einer ersten Ausführung in unterschiedlichen Ansichten;
- Figur 2a: einen Ausschnitt aus einem Wasserfahrzeug mit erfindungsgemäßer Stabilisierungseinrichtung gemäß einer zweiten Variante einer ersten Ausführung;
- Figur 2b: einen Ausschnitt aus einem Wasserfahrzeug mit erfindungsgemäßer Stabilisierungseinrichtung gemäß einer dritten Variante einer ersten Ausführung;
- Figur 3a: anhand einer Ansicht von unten auf den Schiffskörper eine Ausführung eines plattenförmigen Elementes, wie in den Ausführungen der Figuren 1 und 2 einsetzbar;
- Figur 3b: anhand einer Ansicht von unten auf den Schiffskörper eine weitere Variante einer Ausführung eines plattenförmigen Elementes, wie in den Ausführungen der Figuren 1 und 2 einsetzbar;
- Figur 4a und 4b: einen Ausschnitt aus einem Wasserfahrzeug mit erfindungsgemäßer Stabilisierungseinrichtung gemäß einer ersten Variante einer zweiten Ausführung in unterschiedlichen Ansichten;
- Figur 5: einen Ausschnitt aus einem Wasserfahrzeug mit erfindungsgemäßer Stabilisierungseinrichtung gemäß einer zweiten Variante einer zweiten Ausführung.

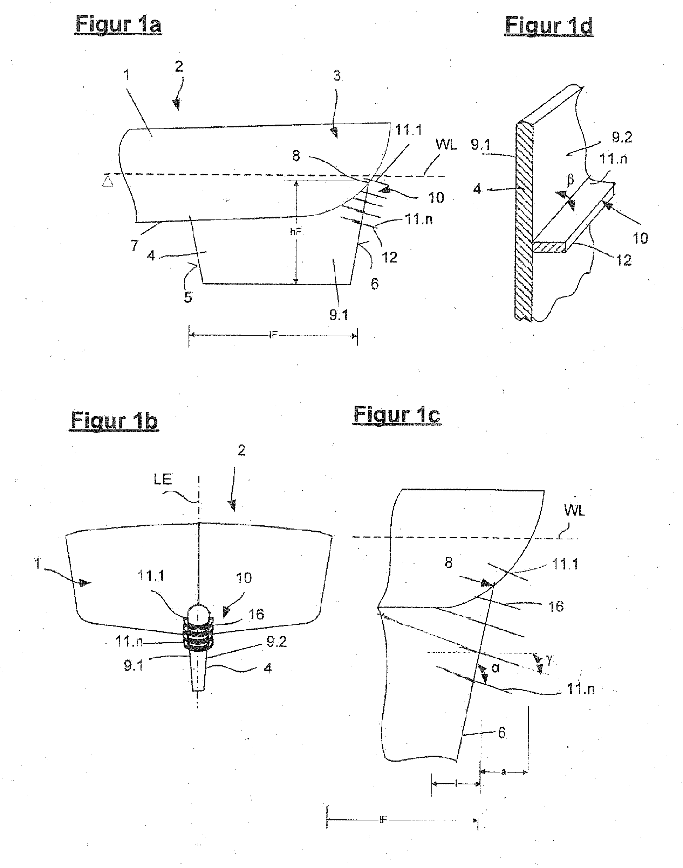

Die Figur 1a verdeutlicht in schematisiert stark vereinfachter Darstellung anhand eines Ausschnittes aus einem Schiffskörper 1 eines Wasserfahrzeuges 2, insbesondere Schleppschiff einen Heckbereich 3 mit einer Finne 4 zur Richtungsstabilisierung beispielhaft eine Anordnung und Ausbildung einer erfindungsgemäß angeordneten zusätzlichen Stabilisierungseinrichtung 10 zur Kursstabilisierung gemäß einer ersten vorteilhaften Ausführung. Der Schiffskörper 1 ist durch eine Erstreckung in Längsrichtung vom Bug zum Heck und eine Erstreckung in Breitenrichtung charakterisiert. Die Erstreckung in vertikaler Richtung wird nachfolgend als Höhenrichtung bezeichnet.

Figur 1a zeigt den Schiffskörper 1 in seiner Erstreckung in Längsrichtung. Die Figur 1b zeigt eine Ansicht A gemäß Figur 1a, in welcher der Schiffskörper in Breitenrichtung wiedergegeben ist. Die Figur 1c verdeutlicht ein Detail gemäß Figur 1a. Die Figur 1d verdeutlicht einen Ausschnitt aus einer Schnittansicht einer Finne 4 in einer Schnittebene quer zur Längsmittelebene LE des Schiffskörpers 1.

Die Anordnung der Finne 4 erfolgt hinsichtlich ihrer Lage gegenüber dem Schiffskörper 1 ortsfest und bezogen auf die Breitenrichtung des Wasserfahrzeuges 2, wie in Figur 1b wiedergegeben, mittig. Die Finne 4 ist in einer durch eine in Längsrichtung ausgerichtete Längsachse und eine Senkrechte zu dieser in Höhenrichtung charakterisierten Ebene angeordnet, welche hier mit der zentralen Längsmittelebene LE des Wasserfahrzeuges 2 zusammenfällt.

Die Finne 4 erstreckt sich zumindest über einen Teilbereich der Erstreckung des Hecks 1 in Längsrichtung und ist durch eine Vorderkante 5, welche auch als Anströmkante fungiert und eine in Längsrichtung beabstandet zur Vorderkante angeordnete und in Heckrichtung ausgerichtete Hinterkante 6 charakterisiert. Die Vorderkante 5 und Hinterkante 6 sind über Seitenflächen 9.1, 9.2 verbunden.

Die Finne 4 schließt sich an ihrer zum Schiffskörper 1 weisenden oberen Seite an den Heckboden 7 an und erstreckt sich von diesem in vertikaler Richtung. Der Übergangsbereich zwischen Heckboden 7 und Finne 4 ist mit 8 bezeichnet. Die Erstreckung der Finne 4 in Längsrichtung des Schiffskörpers 1 betrachtet beschreibt die Finnenlänge lF. Dabei wird als Finnenlänge die längste Erstreckung zwischen Vorderkante 5 und Hinterkante 6, gemessen in einer horizontalen Ebene angesehen. Die Erstreckung der Finne 4 in Höhenrichtung beschreibt die Finnenhöhe hf. Die Finnenhöhe hF beschreibt die größte Erstreckung der Finne 4 in Vertikalrichtung, gemessen in einer Vertikalebene.

Die Hinterkante 6 der Finne 4 verläuft geneigt gegenüber einer Vertikalebene und ist hinsichtlich ihrer Ausführung durch eine Verlaufslinie in Form einer Gerade charakterisiert. Denkbar sind jedoch auch Ausführungen mit Richtungsänderung. In Analogie gilt dies auch für die als Anströmkante fungierende Vorderkante 5.

Erfindungsgemäß ist der Finne 4 im Bereich ihrer Hinterkante eine Stabilisierungseinrichtung 10 zugeordnet, umfassend zumindest einen jeder Seitenfläche 9.1, 9.2 zugeordneten und gegenüber dieser in einem Winkel β angeordneten strömungsführenden Flächenbereich, hier eine Mehrzahl von zueinander beabstandet angeordneten Flächenbereichen 11.1, 11.n. Die Flächenbereiche 11.1 bis 11.n sind vorzugsweise senkrecht zur Seitenfläche im Anschluss- bzw. Angrenzungsbereich angeordnet. D.h. der Winkel β beträgt vorzugsweise 90°. Der einzelne strömungsführende Flächenbereich 11.1, 11.n ist des Weiteren jeweils in einem Winkel α zwischen einschließlich 0° und 180° gegenüber der den Verlauf der Hinterkante 6 der Finne 4 in Höhenrichtung beschreibenden Verlaufslinie ausgerichtet. In der in der Figur 1a und im Detail in Figur 1c dargestellten Ausführung ist der Winkel α größer 90 °. Gegenüber einer Horizontalebene beträgt der zwischen dieser und dem jeweiligen Flächenbereich eingenommene Winkel γ im Bereich zwischen +90° und -90°, im dargestellten Fall ca. - 20°. Die Flächenbereiche 11.1 bis 11.n verlaufen in Längsrichtung geneigt, wobei der in Längsrichtung vordere Endbereich der Flächenbereiche 11.1 bis 11.n in Höhenrichtung betrachtet oberhalb des hinteren Endbereiches liegt.

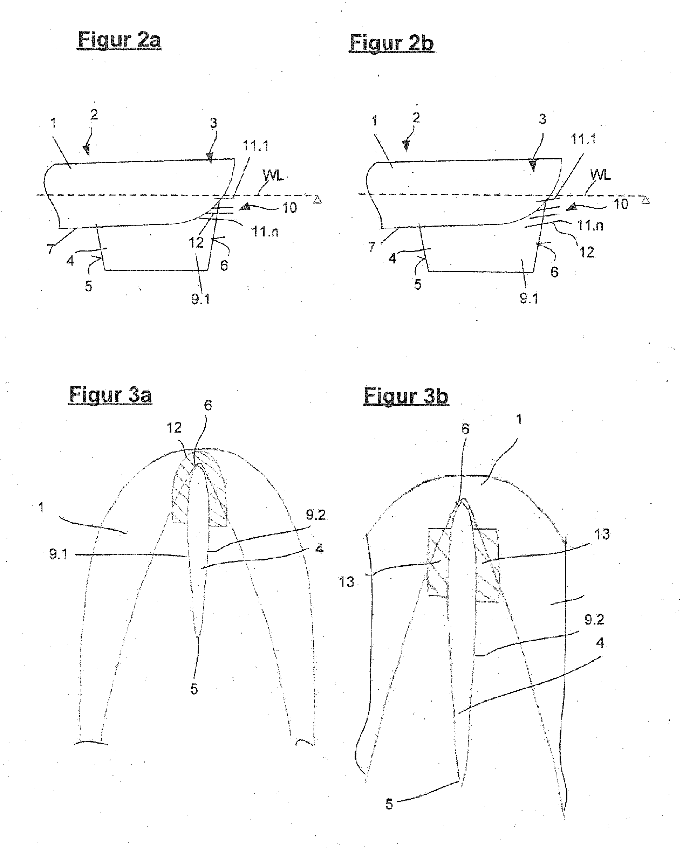

Der einzelne strömungsführende Flächenbereich 11.1 bis 11.n ist in Höhenrichtung des Schiffskörpers 1 betrachtet in einem Bereich angeordnet, der sich von einer theoretischen Konstruktionswasserlinie am Schiffskörper 1 über zwei Drittel der Erstreckung der Finne 4 in Höhenrichtung ausgehend vom Übergangsbereich 8 zwischen Schiffskörper 1 und Finne 4, erstreckt. In Längsrichtung der Finne 4 betrachtet erfolgt die Anordnung in einem Bereich, der sich von der Hinterkante 6 der Finne 4 oder einem vordefinierten Abstand a zu dieser in Längsrichtung bis beispielsweise über die halbe Länge lF der Finne 4 erstreckt. Der einzelne strömungsführende Flächenbereich erstreckt sich gemäß einer ersten Variante in Figur 1 und 3a in Längsrichtung der Finne 4 betrachtet über einen Teilbereich der Erstreckung der Finne 4 in Längsrichtung über die Hinterkante 6 der Finne 4 hinaus.

Die Flächenbereiche 11.1 bis 11.n sind gemäß Figur 1b symmetrisch bezüglich der Längsmittelebene LE an den Seitenflächen 9.1 und 9.2 der Finne 4 angeordnet. Diese erstrecken sich jeweils über einen Teilbereich der Finnenlänge IF ausgehend von der Hinterkante 6 in Längsrichtung in Richtung Vorderkante 5 und über die Hinterkante 6 über ein Maß a hinaus. In besonders vorteilhafter Ausführung sind dazu die beidseits der Längsmittelebene LE in einer gemeinsamen Ebene liegenden Flächenbereiche miteinander über einen um die Hinterkante 6 geführten Verbindungsbereich 16 verbunden. Die Flächenbereiche 11.1 bis 11.n sind in Längsrichtung betrachtet vorzugsweise eben, d.h. frei von einer Richtungsänderung ausgeführt. Denkbar sind jedoch auch andere Ausführungen, beispielsweise in Längsrichtung gewölbt.

In der in den Figuren 1a bis 1d dargestellten Ausführung werden die Flächenbereiche 11.1 bis 11.n von den Ober- und Unterseiten plattenförmiger Elemente 12 ausgebildet. Die einzelnen plattenförmigen Elemente 12 sind in Vertikalrichtung betrachtet parallel zueinander mit Neigungswinkel γ gegenüber einer Horizontalebene angeordnet. Jedes plattenförmige Elemente 12 bildet dabei die beidseitig der Finne 4 angeordneten Flächenbereiche 11.n aus, welche über einen Verbindungsflächenbereich 16, ebenfalls am plattenförmigen Element 11 gebildet, miteinander gekoppelt sind. Das plattenförmige Element 12 beschreibt in einer Ansicht von unten, wie in der Figur 3a wiedergegeben ein U. Jedes plattenförmige Element 12 kann einzeln für sich an der Finne 4 oder dem Schiffskörper 1 befestigt werden.

Gegenüber der ersten Ausführung in den Figuren 1a bis 1d und 3a zeigt die Figur 2a anhand einer Ansicht gemäß Figur 1a eine zweite Variante der Ausrichtung der strömungsführenden Flächenbereiche 11.1 bis 11.n gegenüber einer Horizontalebene. In der Ausführung gemäß Figur 2a beträgt der Neigungswinkel γ 0°. Demgegenüber zeigt Figur 2b eine Ausrichtung der strömungsführenden Flächenbereiche 11.1 bis 11.n mit einem positiven Neigungswinkel γ.

Auch in den Ausführungen gemäß den Figuren 2a und 2b werden die strömungsführenden Flächenbereiche 11.1 bis 11.n von plattenförmigen Elementen 12 gebildet. Diese sind in Analogie zu der in den Figuren 1a bis 1d und 3a£ beschriebenen Ausführung ausgeführt. Für gleiche Elemente sind daher gleiche Bezugsziffern verwendet.

Die Figur 3b zeigt beispielhaft anhand eines Ausschnittes einer Ansicht von unten auf den Schiffskörper 1 eine weitere Variante der Ausführung der strömungsführenden Flächenbereiche 11.1 bis 11.n. Diese sind beispielhaft ebenfalls an plattenförmigen Elementen 13 gebildet. Dabei erstreckt sich der einzelne strömungsführende Flächenbereich 11.1, 11.n und damit das einzelne plattenförmige Element 13 lediglich ausgehend von einem Abstandsmaß a2 zur Hinterkante 6 über einen Teilbereich der Finnenlänge lF in Richtung der Vorderkante 5. An jeder Seitenfläche 9.1, 9.2 sind separate plattenförmige Elemente 13 angeordnet. Bezüglich der Befestigung und Anordnung der plattenförmigen Elemente am Schiffskörper 1 und/oder der Finne 4 kann auf die vorgenannten Ausführungen verwiesen werden.

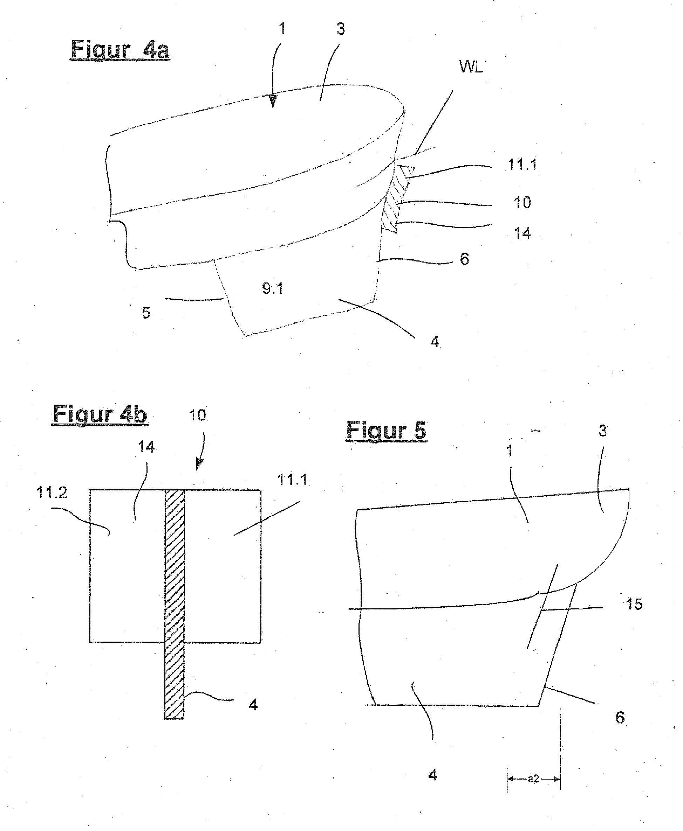

Die Figur 4a zeigt eine erste Variante einer zweiten Ausführung zur Ausbildung und Anordnung einer Stabilisierungseinrichtung 10. Die strömungsführenden Flächenbereiche 11.1 und 11.2 sind hier an einem plattenförmigen Element 14 angeordnet. Dieses ist mittig der Hinterkante 6 zugeordnet und bündig an diese anschließend an dieser angeordnet. Die Befestigung kann am Schiffskörper 1 und/oder der Finne 4 selbst erfolgen.

Die Figur 4a verdeutlicht in einer Perspektivansicht den bündigen Anschluss an die Hinterkante 6. Die Figur 4b zeigt demgegenüber lediglich in einer Ansicht auf eine senkrecht zur Längsmittelebene vorgesehene Schnittebene durch die Finne 4 die beidseitige symmetrische Ausrichtung der strömungsführenden Flächenbereiche 11.1, 11.2 an der Finne 4 sowie deren Erstreckung in Breitenrichtung des Schiffskörpers 1.

Figur 5 zeigt anhand einer Ansicht auf den Schiffskörper 1 in Längsrichtung eine zweite Variante der zweiten Ausführung zur Anordnung und Ausbildung einer Stabilisierungseinrichtung 10. Die strömungsführenden Flächenbereiche 11.1, 11.2 werden hier von separaten plattenförmigen Elementen 15 gebildet, die beidseitig der Finne 4 innerhalb ihres Erstreckungsbereiches in Längsrichtung angeordnet ist und sich in Höhenrichtung über einen Teilbereich der Finnenhöhe hF vom Übergangsbereich 8 am Schiffskörper ausgehend erstreckt. Die Anordnung erfolgt hier in einem Abstandsmaß a2 von der Hinterkante 6. Jedes der plattenförmigen Elemente 15 kann am Schiffskörper 1 und/oder der Finne 4 befestigt sein. Der strömungsführende Flächenbereich wird hier von der Vorderseite des einzelnen plattenförmigen Elementes gebildet. Dieser kann geneigt oder parallel zur Hinterkante an der Finne 4 verlaufend ausgeführt sein.

## Patentansprüche

1. Wasserfahrzeug (2), insbesondere Schleppschiff mit einem Schiffskörper (1) und einer im Heckbereich (3) angeordneten und sich in Längsrichtung des Schiffskörpers (1) erstreckenden Finne (4), welche eine als Anströmkante fungierende Vorderkante (5) und eine zu dieser entgegengesetzt ausgerichtete Hinterkante (6) und Seitenflächen (9.1, 9.2) aufweist, wobei das Wasserfahrzeug im dem Heckbereich gegenüberliegenden Bereich einen Antrieb aufweist;
wobei der Finne (4) im Bereich ihrer Hinterkante (6) eine Stabilisierungseinrichtung zugeordnet ist, umfassend zumindest einen jeder Seitenfläche (9.1, 9.2) zugeordneten und gegenüber dieser in einem Winkel (β) angeordneten strömungsführenden Flächenbereich (11.1, 11.n);
**dadurch gekennzeichnet,**
**dass** jeder Seitenfläche (9.1, 9.2) der Finne (4) eine Mehrzahl von zueinander beabstandeten strömungsführenden Flächenbereichenzugeordnet ist, wobei zumindest ein Teil der jeweils einer Seitenfläche (9.1, 9.2) zugeordneten strömungsführenden Flächenbereiche (11.1, 11.n) parallel zueinander angeordnet sind, und wobei der einzelne strömungsführende Flächenbereich (11.1, 11.2) in Höhenrichtung des Schiffskörpers (1) betrachtet in einem Bereich angeordnet ist, der sich von einer theoretischen Konstruktionswasserlinie (WL) am Schiffskörper (1) über zwei Drittel der Finnenhöhe (hF) ausgehend vom Übergangsbereich (8) zwischen Schiffskörper (1) und Finne (4), erstreckt und dass der einzelne strömungsführende Flächenbereich (11.1, 11.2) gegenüber einer Horizontalebene, insbesondere einer durch die theoretische Konstruktionswasserlinie gelegten Horizontalebene geneigt, insbesondere ein einem Winkel von ≠0°, vorzugsweise in einem Bereich von 1° bis 20° oder -1° bis -20° verlaufend ausgeführt ist.

2. Wasserfahrzeug (2) nach Anspruch 1;
**dadurch gekennzeichnet, dass** der einzelne strömungsführende Flächenbereich (11.1, 11.2) jeweils in einem Winkel (α) zwischen einschließlich 0° und 180° gegenüber einer den Verlauf der Hinterkante (6) der Finne (4) in Höhenrichtung beschreibenden Verlaufslinie ausgerichtet ist.

3. Wasserfahrzeug (2) nach einem der Ansprüche 1 oder 2,
**dadurch gekennzeichnet, dass** der einzelne strömungsführende Flächenbereich (11.1, 11.2) in Längsrichtung der Finne (4) betrachtet in einem Bereich angeordnet ist, der sich von der Hinterkante (6) der Finne (4) oder einem vordefinierten Abstand (a2) zu dieser in Längsrichtung mindestens über ein Viertel der Finnenlänge (If) erstreckt.

4. Wasserfahrzeug (2) nach einem der Ansprüche 1 bis 3,
**dadurch gekennzeichnet, dass** der einzelne strömungsführende Flächenbereich (11.1, 11.2) sich in Längsrichtung der Finne (4) betrachtet gemäß einer der nachfolgenden Möglichkeiten erstreckt:
- über einen Teilbereich der Erstreckung der Finne (4) in Längsrichtung bis zu einem Abstandsmaß vor der Hinterkante (6);
- über einen Teilbereich der Erstreckung der Finne (4) in Längsrichtung bis zur Hinterkante (6);
- über einen Teilbereich der Erstreckung der Finne (4) in Längsrichtung über die Hinterkante (6) der Finne (4) hinaus;
- Erstreckung entlang oder parallel zur Hinterkante (6).

5. Wasserfahrzeug (2) nach einem der vorhergehenden Ansprüche,
**dadurch gekennzeichnet, dass** die Anordnung und Ausrichtung der einzelnen strömungsführenden Flächenbereiche (11.1, 11.n) an den einzelnen Seitenflächen (9.1, 9.2) symmetrisch bezüglich einer durch eine Längsachse der Finne (4) und einer Senkrechten zu dieser charakterisierenden Ebene erfolgt.

6. Wasserfahrzeug (2) nach einem der vorhergehenden Ansprüche,
**dadurch gekennzeichnet, dass** an unterschiedlichen Seitenflächen (9.1, 9.2) der Finne (4) angeordnete strömungsführende Flächenbereiche (11.1, 11.n) miteinander über einen um die Hinterkante (6) geführten Verbindungsflächenbereich (16) miteinander verbunden sind.

7. Wasserfahrzeug (2) nach einem der vorhergehenden Ansprüche,
**dadurch gekennzeichnet, dass** ein einzelner strömungsführender Flächenbereich von der Ober-und/oder Unterseite eines plattenförmigen Elementes (12, 13) gebildet ist, welches einzeln oder in Gruppen mit mittels zumindest einer Verbindung aus der nachfolgenden Gruppe an der Finne (4) und/oder dem Schiffskörper (1) befestigt ist:
- kraftschlüssige Verbindung
- formschlüssige Verbindung
- stoffschlüssige Verbindung.

8. Wasserfahrzeug (2) nach einem der Ansprüche 1 bis 6,
**dadurch gekennzeichnet, dass** ein einzelner strömungsführender Flächenbereich von der Vorderseite eines plattenförmigen Elementes (14) gebildet ist, welches mittels zumindest einer Verbindung aus der nachfolgenden Gruppe an der Finne (4) und/oder dem Schiffskörper (1) befestigt ist:
- kraftschlüssige Verbindung
- formschlüssige Verbindung
- stoffschlüssige Verbindung.

9. Wasserfahrzeug (2) nach Anspruch 8,
**dadurch gekennzeichnet, dass** die jeder Seitenfläche (9.1, 9.2) zugeordneten strömungsführenden Flächenbereiche (11.1, 11.2) an einem plattenförmigen Element (14) ausgebildet sind, welches an der Hinterkante (6) mittig unter Überstand der beiden Flächenbereiche angeordnet ist.

10. Wasserfahrzeug (2) nach einem der vorhergehenden Ansprüche,
**dadurch gekennzeichnet, dass** der Antrieb zwei beidseits der Längsmittelebene angeordnete steuerbare Antriebseinheiten aufweist.

## Claims

1. Watercraft (2), in particular tugboat having a hull (1) and a fin (4) which is arranged in the stern region (3), extends in the longitudinal direction of the hull (1), and has a front edge (5) which acts as a leading edge, and a rear edge (6) which is oriented in the opposite direction with respect to the said front edge (5), and side faces (9.1, 9.2), the watercraft having a drive in the region which lies opposite the stern region, the fin (4) being assigned, in the region of its rear edge (6), a stabilization device, comprising at least one flow-conducting surface region (11.1, 11.n) which is assigned to each side face (9.1, 9.2) and is arranged at an angle (β) with respect to the latter; **characterized in that** each side face (9.1, 9.2) of the fin (4) comprises a plurality of flow-conducting surface regions (11.1, 11.n) which are spaced apart from one another, at least part of the flow-conducting surface regions (11.1, 11.n) which are assigned to in each case one side face (9.1, 9.2) being arranged parallel to one another, and the individual flow-conducting surface region (11.1, 11.2) being arranged, as viewed in the vertical direction of the hull (1), in a region which extends from a theoretical design waterline (WL) on the hull (1) over two thirds of the fin height (hF) starting from the transition region (8) between the hull (1) and the fin (4), and **in that** the individual flow-conducting surface region (11.1, 11.2) is configured in an inclined manner with respect to a horizontal plane, in particular a horizontal plane which is laid through the theoretical design waterline, so as to run, in particular, at an angle of ≠ 0°, preferably in a range of from 1° to 20° or from -1° to -20°.

2. Watercraft (2) according to Claim 1, **characterized in that** the individual flow-conducting surface region (11.1, 11.2) is oriented in each case at an angle (α) between 0° and 180° inclusive with respect to a course line which describes the course of the rear edge (6) of the fin (4) in the vertical direction.

3. Watercraft (2) according to either of Claims 1 and 2, **characterized in that** the individual flow-conducting surface region (11.1, 11.2) is arranged, as viewed in the longitudinal direction of the fin (4), in a region which extends in the longitudinal direction at least over a quarter of the fin length (lf) from the rear edge (6) of the fin (4) or from a predefined spacing (a2) from the said rear edge (6).

4. Watercraft (2) according to one of Claims 1 to 3, **characterized in that** the individual flow-conducting surface region (11.1, 11.2) extends, as viewed in the longitudinal direction of the fin (4), in accordance with one of the following options:
- over a part region of the extent of the fin (4) in the longitudinal direction as far as a clearance in front of the rear edge (6);
- over a part region of the extent of the fin (4) in the longitudinal direction as far as the rear edge (6);
- over a part region of the extent of the fin (4) in the longitudinal direction beyond the rear edge (6) of the fin (4);
- extent along or parallel to the rear edge (6).

5. Watercraft (2) according to one of the preceding claims, **characterized in that** the arrangement and orientation of the individual flow-conducting surface regions (11.1, 11.n) on the individual side faces (9.1, 9.2) are effected symmetrically with regard to a plane which is **characterized by** a longitudinal axis of the fin (4) and a perpendicular with respect to it.

6. Watercraft (2) according to one of the preceding claims, **characterized in that** flow-conducting surface regions (11.1, 11.n) which are arranged on different side faces (9.1, 9.2) of the fin (4) are connected to one another via a connecting surface region (16) which is guided around the rear edge (6).

7. Watercraft (2) according to one of the preceding claims, **characterized in that** an individual flow-conducting surface region is formed by the upper side and/or underside of a plate-shaped element (12, 13) which is fastened individually or in groups to the fin (4) and/or the hull (1) by means of at least one connection from the following group:
- non-positive connection
- positively locking connection
- integrally joined connection.

8. Watercraft (2) according to one of Claims 1 to 6, **characterized in that** an individual flow-conducting surface region is formed by the front side of a plate-shaped element (14) which is fastened to the fin (4) and/or the hull (1) by means of at least one connection from the following group:
- non-positive connection
- positively locking connection
- integrally joined connection.

9. Watercraft (2) according to Claim 8, **characterized in that** the flow-conducting surface regions (11.1, 11.2) which are assigned to each side face (9.1, 9.2) are configured on a plate-shaped element (14) which is arranged centrally on the rear edge (6) with an overhang of the two surface regions.

10. Watercraft (2) according to one of the preceding claims, **characterized in that** the drive has two controllable drive units which are arranged on both sides of the longitudinal centre plane.

## Revendications

1. Navire (2), en particulier remorqueur avec une coque de navire (1) et un aileron (4) disposé dans la partie arrière (3) et s'étendant dans la direction longitudinale de la coque de navire (1), qui présente une arête avant (5) servant de bord d'attaque et une arête arrière (6) orientée dans le sens opposé à celle-ci, et des surfaces latérales (9.1, 9.2), le navire, dans la région opposée à la région arrière, présentant un entraînement, l'aileron (4), dans la région de son arête arrière (6), étant associé à un dispositif de stabilisation comprenant au moins une région de surface (11.1, 11. n) guidant l'écoulement, associée à chaque surface latérale (9.1, 9.2) et disposée par rapport à celle-ci suivant un angle (β) ;
**caractérisé en ce que**
chaque surface latérale (9.1, 9.2) de l'aileron (4) comprend une pluralité de régions de surface (11.1, 11.n) guidant l'écoulement, espacées les unes des autres, au moins une partie des régions de surface (11.1, 11.n) guidant l'écoulement, associées à chaque fois à une surface latérale (9.1, 9.2), étant disposées parallèlement les unes aux autres et la région de surface unique guidant l'écoulement (11.1, 11.2), vue dans la direction en hauteur de la coque du navire (1), étant disposée dans une région qui s'étend depuis une ligne d'eau de construction théorique (WL) au niveau du de la coque du navire (1) sur deux tiers de la hauteur de l'aileron (hF) à partir de la région de transition (8) entre la coque de navire (1) et l'aileron (4), et **en ce que** la région de surface unique guidant l'écoulement (11.1, 11.2) est réalisé de manière inclinée par rapport à un plan horizontal, en particulier un plan horizontal passant par la ligne d'eau de construction théorique, en particulier de manière à s'étendre suivant un angle ≠ 0°, de préférence compris dans une plage de 1° à 20° ou de -1° à -20°.

2. Navire (2) selon la revendication 1, **caractérisé en ce que** la région de surface unique guidant l'écoulement (11.1, 11.2) est orientée à chaque fois suivant un angle (α) compris entre 0° et 180° inclus par rapport à une ligne d'étendue décrivant l'allure de l'arête arrière (6) de l'aileron (4) dans la direction en hauteur.

3. Navire (2) selon l'une quelconque des revendications 1 ou 2, **caractérisé en ce que** la région de surface unique guidant l'écoulement (11.1, 11.2) est disposée, vu dans la direction longitudinale de l'aileron (4), dans une région qui s'étend depuis l'arête arrière (6) de l'aileron (4) ou à une distance prédéfinie (a2) de celle-ci dans la direction longitudinale au moins sur un quart de la longueur de l'aileron (lf).

4. Navire (2) selon l'une quelconque des revendications 1 à 3, **caractérisé en ce que** la région de surface unique guidant l'écoulement (11.1, 11.2) s'étend, vu dans la direction longitudinale de l'aileron (4), suivant l'une des possibilités suivantes :
- sur une région partielle de l'étendue de l'aileron (4) dans la direction longitudinale jusqu'à une certaine distance avant l'arête arrière (6) ;
- sur une région partielle de l'étendue de l'aileron (4) dans la direction longitudinale jusqu'à l'arête arrière (6) ;
- sur une région partielle de l'étendue de l'aileron (4) dans la direction longitudinale au-delà de l'arête arrière (6) de l'aileron (4) ;
- sur une étendue le long de l'arête arrière (6) parallèlement à celle-ci.

5. Navire (2) selon l'une quelconque des revendications précédentes, **caractérisé en ce que** l'agencement et l'orientation des régions de surface uniques guidant l'écoulement (11.1, 11.n) au niveau des surfaces latérales individuelles (9.1, 9.2) s'effectue symétriquement par rapport à un plan passant par un axe longitudinal de l'aileron (4) et caractérisant une perpendiculaire à celui-ci.

6. Navire (2) selon l'une quelconque des revendications précédentes, **caractérisé en ce que** des régions de surface guidant l'écoulement (11.1, 11.n), disposées au niveau de surfaces latérales différentes (9.1, 9.2) de l'aileron (4) sont connectées les unes aux autres par le biais d'une région de surface de liaison (16) guidée autour de l'arête arrière (6).

7. Navire (2) selon l'une quelconque des revendications précédentes, **caractérisé en ce qu'**une région de surface unique guidant l'écoulement est formée par le côté supérieur et/ou le côté inférieur d'un élément en forme de plaque (12, 13) qui est fixé à l'aileron (4) et/ou à la coque du navire (1) individuellement ou en groupe au moyen d'au moins une connexion appartenant au groupe suivant :
- une connexion par engagement par force
- une connexion par engagement par correspondance de formes
- une connexion par liaison de matière.

8. Navire (2) selon l'une quelconque des revendications 1 à 6, **caractérisé en ce qu'**une région de surface unique guidant l'écoulement est formée par le côté avant d'un élément en forme de plaque (14) qui est fixé à l'aileron (4) et/ou à la coque du navire (1) au moyen d'au moins une connexion appartenant au groupe suivant :
- une connexion par engagement par force
- une connexion par engagement par correspondance de formes
- une connexion par liaison de matière.

9. Navire (2) selon la revendication 8, **caractérisé en ce que** les régions de surface (11.1, 11.2) guidant l'écoulement, associées à chaque surface latérale (9.1, 9.2), sont réalisées au niveau d'un élément en forme de plaque (14) qui est disposé au niveau de l'arête arrière (6) centralement en dessous d'un surplomb des deux régions de surface.

10. Navire (2) selon l'une quelconque des revendications précédentes, **caractérisé en ce que** l'entraînement présente deux unités d'entraînement commandables disposées de chaque côté du plan médian longitudinal.
